# EUROPEAN PATENT APPLICATION

(11) **EP 4 057 461 A1**
(43) Date of publication of application: **14.09.2022**
(21) Application number: 21163073.6
(22) Date of filing: 17.03.2021
(51) Int. Cl.: H02H 3/08, H02H 3/093, H02H 3/02, H02H 3/05

(54) **A METHOD AND AN ELECTRICAL PROTECTION DEVICE FOR PROTECTING A LOAD POWERED BY A POWER SOURCE**

(30) Priority: 12.03.2021 PT 2021117113
(71) Applicant: Noras, Jorge Alberto Ferreira, 2560-346 Torres Vedras (PT)
(72) Inventor: Noras, Jorge Alberto Ferreira, 2560-346 Torres Vedras (PT)
(74) Representative: do Nascimento Gomes, Rui

(57) **Abstract**

The present disclosure concerns electrical protection devices, which protect a load (12) powered by a power source (11), or a power source (11) powering a load, from high currents. In an aspect of the present disclosure, a device (17) provides a reliable and robust solution, which is based on an irreversible electrical cut of a circuit, through the generation of a current higher than a predefined fusing current of a fuse (16) and thereby irreversibly cutting a circuit connection by blowing the fuse. When such irreversible cut is provided, electric current stops to flow. It thereby overcomes prior art solutions, in the sense that it is not reversible and/or overridable.

Fig. 1

## Description

### TECHNICAL FIELD

The present disclosure concerns electrical protection devices, which protect a load powered by a power source from high electric currents.

### PRIOR ART

With the development of electric equipment with a higher power demand, electric risks also rise, as such devices are powered through batteries or other means which enable such power availability.

Although there exist several types of solutions which address electric malfunctions or short circuits, such solutions still have several drawbacks which put at risk the equipment and human operators.

Fuses are provided in electric circuits between electrical power sources and the respective load. Yet, while a fuse may address a situation in which the current demand is very high, for instance due to a short circuit, there exist many situations in which the malfunction may lead to a high enough current - such as several tens of ampere - which still is below the fusing current of the fuse, which may be, for instance, of 100 A. Such a situation could easily lead to a heat point generating a fire in an element of the load.

In the case of an accident with an electric or combustion motorized vehicle, a direct shunt from a battery may cause a high current which is yet lower than the fusing current of the safety fuse. Such circuits usually merely contain a wire with a fuse connecting the battery to the load. Such high current may still cause a fire or another type of electrical hazard to a user or the load being powered by the batteries and will, as explained above, render electronic based solutions - as the case of a switch - useless.

The present disclosure innovatively addresses such issues and provides a more robust and reliable solution towards the increased number of applications in which high electric currents are in close proximity with users.

### SUMMARY OF THE DISCLOSURE

According to one aspect, an electrical protection device is provided, in particular for a load powered by a power source, such as one or more battery cells. The electrical protection device comprises:
- a protection device controller,
- a circuit electrically connectable to the power source and the load such that the power source is able to electrically power the load,
- a cut-off module configured to perform an irreversible cut of the circuit, such that the said electrical connection between the power source and the load is irreversibly cut, by generating a current higher than a predefined fusing current and thereby irreversibly cutting the said circuit connection by blowing a fuse, and
the protection device controller is configured to, upon detection of an electrical risk associated with the load, the power source, and/or the electrical protection device, actuate the cut-off module to perform an irreversible cut of the circuit.

The electrical protection device is such that provides an electrical connection between a power source and a load. Such electrical connection is provided by the circuit. The power source may be electrically connectable to the circuit through a first input and the load may be electrically connectable to the circuit through a second input. Both battery and load may be also mechanically connectable or couplable to the first and second inputs, respectively, be it directly or through any other element, provided that electrical connection is maintained.

The electrical protection device further comprises a cut-off module configured to perform an irreversible cut of the circuit. The irreversible cut of the circuit is such that the electrical connection provided by the circuit (which may be provided between the referred first and second inputs, is irreversibly cut). The cut-off module is controllable by the protection device controller, the protection device controlled being configured to actuate the cut-off module.

The protection device controller is configured to, upon the detection of an electrical risk, actuate the cut-off module. Thus, in an inventive aspect, the device of the present disclosure provides a reliable and robust solution, which is based on an irreversible electrical cut of the circuit. When such irreversible cut is provided, electric current stops to flow irreversibly, for the connection is cut through the blow of the fuse. It thereby overcomes prior art solutions, in the sense that it is not reversible and/or overridable, as electronic switches are. As referred, the cut of the circuit is provided in an inventive manner by the cut-off module, which generates a current higher than the predefined fusing current and thereby irreversibly cuts the circuit connection by blowing a fuse. Such provides for an eased and reliable manner of guaranteeing that the electrical risk is avoided.

The electrical risk may be associated with the load, the power source and/or the electrical protection device itself. In particular, the electrical risk may be determined based on methods which are known in the art, such as by sensing the consumption of the load or measuring the temperature of the power source. Examples of such methods are provided in the Detailed Description.

In an embodiment of the electrical protection device, it further comprises a fuse, the fuse having a predefined fusing current and being provided in the circuit and thereby the power source and the load, and the cut-off module thereby being configured to perform an irreversible cut of the circuit, such that the said electrical connection between the power source and the load is irreversibly cut, by generating a current higher than a predefined fusing current and thereby irreversibly cutting the said circuit connection by blowing the fuse.

The device of the present disclosure provides for a facilitated manner of irreversibly cutting the circuit, and thereby an irreversible cut of the electrically connection. Such solution is particularly advantageous as it resorts to the blow up of a fuse. The cut-off module may thereby take any form known in the art to generate a high current. Such high current would therefore be adapted to a fusing current of a fuse in use.

In a further aspect, a method for electrical protection is provided, in particular for a load powered by a power source, such as one or more battery cells. The method comprises the steps of:
- for a power source powering a load through a circuit, identify an electrical risk associated with the load, the power source, and/or the electrical protection device, and
- upon the detection of such electrical risk, perform an irreversible cut of the circuit by generating a current higher than a predefined fusing current of a fuse and thereby irreversibly cutting the said circuit connection by blowing the fuse.

The method thereby provides the inventive aspects and advantages above referred with regard to the electrical protection device.

The method provides a reliable and robust solution, which is based on an irreversible electrical cut of the circuit. When such irreversible cut is provided, electric current stops to flow. It thereby overcomes prior art solutions, in the sense that it is not reversible and/or overridable, as electronic switches are. As referred, the cut of the circuit is provided in an inventive manner by the cut-off module, which generates a current higher than the predefined fusing current and thereby irreversibly cuts the circuit connection by blowing the fuse. Such provides for an eased and reliable manner of guaranteeing that the electrical risk is avoided.

The electrical risk may be associated with the load, the power source and/or the electrical protection device itself. Several embodiments are described in the Detailed Description.

According to another aspect, an electrical protection assembly is provided. The electrical protection assembly comprises a plurality of electrical protection devices according to the present disclosure, in any of the respective embodiments, wherein each electrical protection device is electrically connectable with a power source and a load.

Such electrical protection assembly thereby allows to electrically protect a setup comprising a plurality of loads and/or a plurality of power sources.

In an embodiment of the electrical protection assembly, each electrical protection device is configured to, upon detection of an electrical risk, actuate the respective cut-off module to perform an irreversible cut of the respective circuit, independently from any other remaining electrical protection device of the plurality of electrical protection devices.

Such embodiment of the electrical protection assembly thereby provides for the independent protection of the loads and/or power sources, while allowing that the remaining loads and/or power sources remain operative.

In another aspect, a power source assembly is provided. The power source assembly comprises a power source and the electrical protection device according to the present disclosure, in any of the respective embodiments, the power source being electrically connected to the circuit, such that the power source is able to electrically power a load connectable to such circuit.

In an embodiment of the power source assembly, it comprises a plurality of power sources and an electrical protection assembly according to the present disclosure, in any of the respective embodiments, wherein each electrical protection device is associated with a power source of said plurality of power sources, such that each power source is able to electrically power a load connectable to the circuit of the respective electrical protection device, and thereby each power source being able to electrically power a load connectable to such circuit of the respective electrical protection device.

Such power source assembly thereby allows to electrically protect an assembly comprising a plurality of power sources.

In an embodiment, each electrical protection device is associated with a single power source of said plurality of power sources. Thereby providing for the independent protection of each power source, while allowing that the remaining power sources remain operative.

In another aspect, a load assembly is provided. The load assembly comprises a load and the electrical protection device according to the present disclosure, in any of the respective embodiments, the load being electrically connected to the circuit, such that the load is able to be electrically powered by a power source electrically connectable to such circuit.

In an embodiment of the load assembly, it comprises a plurality of loads and an electrical protection assembly according to the present disclosure, in any of the respective embodiments, wherein each electrical protection device is associated with a load of said plurality of loads, such that each load is able to be electrically powered by a power source connectable to the circuit of the respective electrical protection device, and thereby each load being able to be electrically powered by a power source connectable to such circuit of the respective electrical protection device.

Such power source assembly thereby allows to electrically protect an assembly comprising a plurality of power sources.

In an embodiment, each electrical protection device is associated with a single load of said plurality of loads. Thereby providing for the independent protection of each load, while allowing that the remaining loads remain operative.

In another aspect, a use of the electrical protection device of the present disclosure, in any of its embodiments, is provided. The use of the device includes electrically protecting a load powered by a power source and/or a power source powering a load.

In an embodiment of the referred use, the load comprises a vehicle or a part or module of a vehicle, and the power source comprises one or more battery cells.

In specific embodiment, the vehicle is an electric car.

In another embodiment, the vehicle is a personal air vehicle.

In yet another embodiment, the vehicle is an electric ship.

In another embodiment, the vehicle is an electric buoy.

### DESCRIPTION OF FIGURES

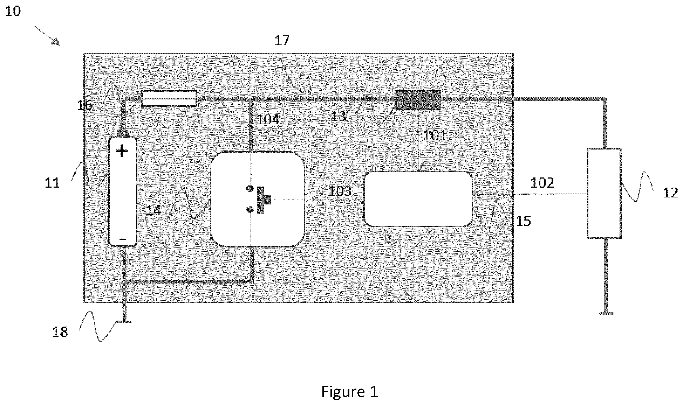

Figure 1 - representation of an embodiment of the electrical protection device (10) of the present disclosure. It comprises a power source (11) which, in the particular case of the embodiment, comprises one or more battery cells, electrically connected through a first input (not shown) a circuit (17) and a second input (not shown) to a load (12), thereby electrically powering the load (12). The circuit (17) electrically connects the power source (11) comprising battery cells to the load (12) such that the one or more battery cells are able to power the load. A protection device controller (15) is provided. In the particular case of the embodiment of Figure 1, the protection device controller (15) is configured to obtain a parameter which corresponds to at least one first consumption value associated with a power consumption of the load (101) and at least one second consumption value associated with an expected power consumption of the load (102). The first consumption value may be a first current value, obtained from a current sensor (13). Furthermore, a cut-off module (14) is provided, in particular configured to perform an irreversible cut of the circuit (104), such that the said electrical connection of the circuit (17) is irreversibly cut. The protection device controller (15) may be further configured to determine if the second consumption value (102) is higher than the at least one first consumption value (101) summed with a predefined tolerance value, and if so, actuate the cut-off module (14) to perform an irreversible electrical cut of the circuit (104). A fuse (16) may be further provided. The determination of the irreversible electrical cut of the circuit (104) may be further provided in relation to determining whether the first consumption or current value (101) is lower than a fusing current of the fuse (16). The irreversible electrical cut of the circuit (104) may be provided by means of the cut-off module (14) generating a current higher than the predefined fusing current and thereby irreversibly cutting the circuit by blowing the fuse (16). An electrical ground reference (18) may be provided.

### DETAILED DESCRIPTION

The more general configurations of the present disclosure are described in the Summary of the disclosure. Such configurations are detailed below in accordance with other advantageous and/or preferred embodiments of implementation of the objects of the present disclosure.

Several embodiments of the electrical protection device are subsequently disclosed.

As previously referred, the device of the present disclosure is particularly advantageous as it resorts to the blow up of a fuse. The cut-off module may thereby take any form known in the art to generate a high current. Such high current would therefore be adapted to a fusing current of a fuse in use. The generated high current would thereby be similar to a short circuit. It may be provided by any electronic or electromechanics means known in the art which would provide for the generation of said high current, in a controllable manner.

In an embodiment, the protection device controller is configured to determine the electrical risk based on the determination of a parameter of the load or of the power source. The electrical risk may alternatively be manually or automatically indicated to the protection device controller, for instance by means of a secondary controller which is external to the device of the present disclosure. In an embodiment, such information, which consists of transmittable data, may be sent through electronic means, such as wireless or wired communication means.

In a particular embodiment, the protection device controller is further configured to:
- obtain a measured parameter value of the load or of the power source,
- obtain an expected parameter value of the load or of the power source, and
- compare the measured value with the expected value and, based on such comparison, actuate the cut-off module to perform the irreversible cut of the circuit.

The protection device controller is further configured to obtain a measured parameter value of the load or of the power source, and also an expected parameter value of the load or of the power source. The protection device controller is further configured to compare the measured value with the expected value and, based on such comparison, determine the actuation of the cut-off module with regard to the irreversible cut of the circuit.

In an embodiment, the protection device controller is further configured to such that the comparison between the measured value and the expected value comprises determining whether the measured value is higher than the expected value summed with a predefined tolerance and if so, actuate the cut-off module to perform the irreversible cut of the circuit.

Thus, actuation of the cut-off module is only provided if the measured value is higher than the expected value, provided a predefined tolerance.

In an embodiment, the predefined tolerance value may be zero or near zero. In other embodiments, it may take the form of a percentage of the expected parameter value.

In yet another embodiment, the protection device controller is further configured to compare the measured value and the expected value during a predefined period of time.

Such embodiment is particularly advantageous, as it avoids that the circuit is irreversibly cut merely because one measured parameter value (possibly provided the referred predefined tolerance value) was above the expected parameter value for an instant, instead continuing to perform such comparison for a predefined period of time. The criterion to determine whether the irreversible cut should be performed may involve determining if more than a predefined number of measured parameter values were above the expected parameter values or performing an average of measured parameter values during the predefined period of time. Other methods may be applicable.

In an embodiment, the protection device controller is further configured to receive one or more messages from an external controller, such one or more messages comprising information on the expected parameter value. The external controller may be a load controller, thereby associated with the load, or a power source controller, thereby associated with the power source.

In an embodiment, the parameter of the load or of the power source is a consumption of the load. Thus, in such case, the protection device controller is specifically configured to:
- obtain a measured consumption value of the load,
- obtain an expected consumption value of the load, and
- compare the measured consumption value with the expected consumption value and, based on such comparison, actuate the cut-off module to perform the irreversible cut of the circuit.

The expected power consumption may be determined through a method known in the art. Several methods are possible but not limiting, some of which are subsequently described.

In an embodiment, the measured parameter value and the expected parameter value are current values.

In another embodiment, the electrical protection device further comprises a current sensor provided in the circuit, the at least one measured current value being obtained through such current sensor.

In an alternative embodiment, the parameter of the load or of the power source is a temperature of the power source. Thus, in such case, the protection device controller is specifically configured to:
- obtain a measured temperature value of the power source,
- obtain an expected temperature value of the power source, and
- compare the measured consumption value with the expected consumption value and, based on such comparison, actuate the cut-off module to perform the irreversible cut of the circuit.

In an embodiment, the electrical protection device further comprises a temperature sensor able to be provided adjacently or in contact with the power source, the measured temperature value being obtained through such temperature sensor.

In an embodiment of the electrical protection device, the fuse has a predefined fusing current of 200 A or less, preferably of 100 A or less, more preferably of a value within the range of 50-100 A.

The fuse may, yet, have a predefined fusing current adjusted to the respective application, for any value may be applicable.

Embodiments of the electrical protection assembly of the present disclosure are subsequently disclosed.

It may be that all the electrical protection devices of an electrical protection assembly are connectable or connected to a same load.

It may be that all the electrical protection devices of an electrical protection assembly are connectable or connected to a same power source.

It may be that each of the electrical protection devices of an electrical protection assembly is connectable or connected to a different load.

It may be that each of the electrical protection devices of an electrical protection assembly is connectable or connected to a different power source.

It may be that some of the electrical protection devices of an electrical protection assembly are connectable or connected to a same load, which is different from the load of other electrical protection devices of an electrical protection assembly.

It may be that some of the electrical protection devices of an electrical protection assembly are connectable or connected to a same power source, which is different from the power source of other electrical protection devices of an electrical protection assembly.

Several further embodiments may be provided within the terms of the electrical protection assembly of the present disclosure, some of which are subsequently described.

An electrical protection assembly comprising a plurality of electrical protection devices may be provided to connect all or several of the electrical protection devices to a same power source, and to connect each of the electrical protection devices to a different load.

In such case, an electrical risk associated with a load would lead to the blowing of a fuse of the electrical protection device associated with such load with an electrical risk. The consequence would be that the remaining loads, provided having no electrical risk identified, would remain operative.

An electrical protection assembly comprising a plurality of electrical protection devices may be provided to connect all or several of the electrical protection devices to a same load, and to connect each of the electrical protection devices to a different power source.

In such case, an electrical risk associated with a power source would lead to the blowing of a fuse of the electrical protection device associated with such power source with an electrical risk. The consequence would be that the remaining power sources, provided having no electrical risk identified, would remain operative and powering the respective load or loads.

An electrical protection assembly comprising a plurality of electrical protection devices may also alternatively be provided to each of the electrical protection devices to a different power source, and to connect each of the electrical protection devices to a different load.

In such case, an electrical risk associated with a power source would lead to the blowing of a fuse of the electrical protection device associated with such power source with an electrical risk. The consequence would be that the remaining power sources, provided having no electrical risk identified, would remain operative and powering the respective load.

Also, in such case, an electrical risk associated with a load would lead to the blowing of a fuse of the electrical protection device associated with such load with an electrical risk. The consequence would be that the remaining loads, provided having no electrical risk identified, would remain operative and powered by the respective power source.

Embodiments of the power source assembly of the present disclosure are subsequently disclosed.

In an embodiment, the power source comprises one or more battery cells, the power source assembly thereby being a battery assembly.

In another embodiment, the battery cells comprise lithium-ion, lead-acid, metal-air electrochemical, nickel-cadmium and/or nickel metal hydride battery cells.

As previously referred, in an embodiment, the power source assembly comprises a plurality of power sources and an electrical protection assembly according to the present disclosure, in any of the respective embodiments, wherein each electrical protection device is associated with a power source of said plurality of power sources, such that each power source is able to electrically power a load connectable to the circuit of the respective electrical protection device, and thereby each power source being able to electrically power a load connectable to such circuit of the respective electrical protection device.

Such power source assembly thereby allows to electrically protect an assembly comprising a plurality of power sources.

Each power source thereby has a corresponding electrical protection device, which is part of the electrical protection assembly. Thus, an electrical risk detected through such electrical protection device will lead to the blowing of a corresponding fuse.

While being associated with a particular power source, the blowing of such fuse will lead that such power source no longer powers a load.

It may be that all the electrical protection devices of an electrical protection assembly are connectable or connected to a same load.

It may be that each of the electrical protection devices of an electrical protection assembly is connectable or connected to a different load.

It may be that some of the electrical protection devices of an electrical protection assembly are connectable or connected to a same load, which is different from the load of other electrical protection devices of an electrical protection assembly.

Embodiments of the load assembly of the present disclosure are subsequently disclosed.

As previously referred, in an embodiment, the load assembly comprises a plurality of loads and an electrical protection assembly according to the present disclosure, in any of the respective embodiments, wherein each electrical protection device is associated with a load of said plurality of loads, such that each load is able to be electrically powered by a power source connectable to the circuit of the respective electrical protection device, and thereby each load being able to be electrically powered by a power source connectable to such circuit of the respective electrical protection device.

Such power source assembly thereby allows to electrically protect an assembly comprising a plurality of power sources.

Each load thereby has a corresponding electrical protection device, which is part of the electrical protection assembly. Thus, an electrical risk detected through such electrical protection device will lead to the blowing of a corresponding fuse.

While being associated with a particular load, the blowing of such fuse will lead that a power source no longer powers such load.

It may be that all the electrical protection devices of an electrical protection assembly are connectable or connected to a same power source.

It may be that each of the electrical protection devices of an electrical protection assembly is connectable or connected to a different load.

It may be that some of the electrical protection devices of an electrical protection assembly are connectable or connected to a same load, which is different from the load of other electrical protection devices of an electrical protection assembly.

Embodiments of the methods of the present disclosure are subsequently disclosed.

In an embodiment, the electrical risk is determined based on the determination of a parameter of the load or of the power source.

In an embodiment, the method further comprises the steps of:
- obtain a measured parameter value of the load or of the power source,
- obtain an expected parameter value of the load or of the power source, and
- compare the measured value with the expected value and, based on such comparison, perform the irreversible cut of the circuit.

The method thereby includes to obtain a measured parameter value of the load or of the power source, and also an expected parameter value of the load or of the power source. The method provides the comparison the measured value with the expected value and, based on such comparison, determine the actuation of the cut-off module with regard to the irreversible cut of the circuit.

In an embodiment, the comparison between the measured value and the expected value comprises determining whether the measured value is higher than the expected value summed with a predefined tolerance and if so, perform the irreversible cut of the circuit.

Thus, actuation of the cut-off module is only provided if the measured value is higher than the expected value, provided a predefined tolerance.

In an embodiment, the predefined tolerance value may be zero or near zero. In other embodiments, it may take the form of a percentage of the expected parameter value.

In an embodiment, the comparison of the measured value and the expected value is performed during a predefined period of time.

Such embodiment is particularly advantageous, as it avoids that the circuit is irreversibly cut merely because one measured parameter value (possibly provided the referred predefined tolerance value) was above the expected parameter value for an instant, instead continuing to perform such comparison for a predefined period of time. The criterion to determine whether the irreversible cut should be performed may involve determining if more than a predefined number of measured parameter values were above the expected parameter values or performing an average of measured parameter values during the predefined period of time. Other methods may be applicable.

In an embodiment, the method further comprises obtaining one or more messages from an external controller, such one or more messages comprising information on the expected parameter value. The external controller may be a load controller, thereby associated with the load, or a power source controller, thereby associated with the power source.

In an embodiment, the parameter of the load or of the power source is a consumption of the load.

In an embodiment, the measured parameter value and the expected parameter value are current values.

In another embodiment, the at least one measured current value is obtained through a current sensor.

In an alternative embodiment, the parameter of the load or of the power source is a temperature of the power source.

In a specific embodiment, the method further comprises providing a temperature sensor adjacently or in contact with the power source, the measured temperature value being obtained through such temperature sensor.

In yet another embodiment, the fuse has a predefined fusing current of 200 A or less, preferably of 100 A or less, more preferably of a value within the range of 50-100 A.

Additional embodiments of the method of the present disclosure are subsequently provided, in respect of a plurality of loads and/or a plurality of power sources.

In an embodiment, the method comprises identifying an electrical risk associated with a load and/or a power source from a plurality of loads and/or a plurality of power sources and, upon the detection of such electrical risk, perform an irreversible cut of a circuit associated with such load and/or power source by generating a current higher than a predefined fusing current of a fuse and thereby irreversibly cutting the said circuit connection by blowing the fuse.

In an embodiment, the identification of an electrical risk associated with a load would lead to the blowing of a fuse associated with such load with an electrical risk. The consequence would be that the remaining loads, provided having no electrical risk identified, would remain operative.

In another embodiment, the identification of an electrical risk associated with a power source would lead to the blowing of a fuse associated with such power source with an electrical risk. The consequence would be that the remaining power sources, provided having no electrical risk identified, would remain operative and powering the respective load or loads.

In an embodiment, the identification of an electrical risk associated with a power source would lead to the blowing of a fuse associated with such power source with an electrical risk. The consequence would be that the remaining power sources, provided having no electrical risk identified, would remain operative and powering the respective load. Also, in such case, an electrical risk associated with a load would lead to the blowing of a fuse associated with such load with an electrical risk. The consequence would be that the remaining loads, provided having no electrical risk identified, would remain operative and powered by the respective power source.

In a further embodiment of the method of the present disclosure, the referred generation of a current higher than a predefined fusing current is performed on a fuse corresponding to said load and/or power source with an identified electrical risk, independently from any other loads from said plurality of loads and/or any other power sources from said plurality of power sources.

In yet another embodiment of the method of the present disclosure, the power source comprises one or more battery cells.

In yet another embodiment of the method of the present disclosure, the battery cells comprise lithium-ion, lead-acid, metal-air electrochemical, nickel-cadmium and/or nickel metal hydride battery cells.

The electrical protection device, the electrical protection assembly, the power source assembly, the load assembly and/or their elements include components to perform at least some of the example features and features of the methods described, whether through hardware components (such as memory and / or processor), software or any combination thereof.

In particular, the electrical protection controller may consist of or comprise a microcontroller, with the capability of receiving external data through inputs and providing actuation of outputs, based on predefined configured rules and/or programming.

An article for use with the electrical protection device, such as a prerecorded storage device or other similar computer-readable medium, including program instructions recorded on it, or a computer data signal carrying readable program instructions computer can direct a device to facilitate the implementation of the methods described herein. It is understood that such apparatus, articles of manufacture and computer data signals are also within the scope of the present disclosure.

A "computer-readable medium" means any medium that can store instructions for use or execution by a computer or other computing device, including read-only memory (ROM), erasable programmable read-only memory (EPROM) or flash memory, random access memory (RAM), a portable floppy disk, a drive hard drive (HDD), a solid state storage device (for example, NAND flash or synchronous dynamic RAM (SDRAM)), and/or an optical disc such as a Compact Disc (CD), Digital Versatile Disc (DVD) or Blu-Ray ^{™} Disc.

As will be clear to one skilled in the art, the present disclosure should not be limited to the embodiments described herein, and a number of changes are possible which remain within the scope of the present disclosure.

Of course, the preferred embodiments shown above are combinable, in the different possible forms, being herein avoided the repetition all such combinations.

## Claims

1. An electrical protection device, in particular for a load powered by a power source, **characterized in that** it comprises:
- a protection device controller,
- a circuit electrically connectable to the power source and the load such that the power source is able to electrically power the load,
- a cut-off module configured to perform an irreversible cut of the circuit, such that the said electrical connection between the power source and the load is irreversibly cut, by generating a current higher than a predefined fusing current and thereby irreversibly cutting the said circuit connection by blowing a fuse, and
the protection device controller is configured to, upon detection of an electrical risk associated with the load, the power source, and/or the electrical protection device, actuate the cut-off module to perform an irreversible cut of the circuit.

2. A device according to the previous claim wherein it further comprises a fuse, the fuse having a predefined fusing current and being provided in the circuit and thereby the power source and the load, and the cut-off module thereby being configured to perform an irreversible cut of the circuit, such that the said electrical connection between the power source and the load is irreversibly cut, by generating a current higher than a predefined fusing current and thereby irreversibly cutting the said circuit connection by blowing the fuse.

3. A device according to any of the preceding claims wherein the protection device controller is configured to determine the electrical risk based on the determination of a parameter of the load or of the power source and, optionally, the protection device controller is further configured to:
- obtain a measured parameter value of the load or of the power source,
- obtain an expected parameter value of the load or of the power source, and
- compare the measured value with the expected value and, based on such comparison, actuate the cut-off module to perform the irreversible cut of the circuit, and
optionally, the comparison between the measured value and the expected value comprises determining whether the measured value is higher than the expected value summed with a predefined tolerance and if so, actuate the cut-off module to perform the irreversible cut of the circuit and, optionally, the protection device controller is further configured to compare the measured value and the expected value during a predefined period of time and, optionally, the protection device controller is further configured to receive one or more messages from an external controller, such one or more messages comprising information on the expected parameter value.

4. A device according to the previous claim wherein the parameter of the load or of the power source is a consumption of the load and, optionally, the measured parameter value and the expected parameter value are current values and, optionally, it further comprises a current sensor provided in the circuit, the at least one measured current value being obtained through such current sensor.

5. A device according to any of the claims 3-4 wherein the parameter of the load or of the power source is a temperature of the power source and, optionally, it further comprises a temperature sensor able to be provided adjacently or in contact with the power source, the measured temperature value being obtained through such temperature sensor and, optionally, the fuse has a predefined fusing current of 200 A or less, preferably of 100 A or less, more preferably of a value within the range of 50-100 A.

6. An electrical protection assembly comprising a plurality of electrical protection devices of any of the preceding claims, wherein each electrical protection device is electrically connectable with a power source and a load and, optionally, wherein each electrical protection device is configured to, upon detection of an electrical risk, actuate the respective cut-off module to perform an irreversible cut of the respective circuit, independently from any other remaining electrical protection device of the plurality of electrical protection devices.

7. A power source assembly comprising a power source and the electrical protection device of any of the claims 1-5, the power source being electrically connected to the circuit, such that the power source is able to electrically power a load connectable to such circuit and, optionally, the power source comprises one or more battery cells, the power source assembly thereby being a battery assembly and, optionally, the battery cells comprise lithium-ion, lead-acid, metal-air electrochemical, nickel-cadmium and/or nickel metal hydride battery cells.

8. A power source assembly wherein it comprises a plurality of power sources and an electrical protection assembly according to claim 6, wherein each electrical protection device is associated with a power source of said plurality of power sources, such that each power source is able to electrically power a load connectable to the circuit of the respective electrical protection device, and thereby each power source being able to electrically power a load connectable to such circuit of the respective electrical protection device and, optionally, each electrical protection device is associated with a single power source of said plurality of power sources.

9. A load assembly comprising a load and the electrical protection device of any of the claims 1-5, the load being electrically connected to the circuit, such that the load is able to be electrically powered by a power source electrically connectable to such circuit and, optionally, it comprises a plurality of loads and an electrical protection assembly according to claim 6, wherein each electrical protection device is associated with a load of said plurality of loads, such that each load is able to be electrically powered by a power source connectable to the circuit of the respective electrical protection device, and thereby each load being able to be electrically powered by a power source connectable to such circuit of the respective electrical protection device and, optionally, each electrical protection device is associated with a single load of said plurality of loads.

10. A method for electrical protection, in particular for a load powered by a power source, **characterized in that** it comprises the steps of:
- for a power source powering a load through a circuit, identify an electrical risk associated with the load, the power source and/or the electrical protection device, and
- upon the detection of such electrical risk, perform an irreversible cut of the circuit by generating a current higher than a predefined fusing current of a fuse and thereby irreversibly cutting the said circuit connection by blowing the fuse.

11. A method according to the previous claim wherein the electrical risk is determined based on the determination of a parameter of the load or of the power source.

12. A method according to the previous claim wherein it further comprises the steps of:
- obtain a measured parameter value of the load or of the power source,
- obtain an expected parameter value of the load or of the power source, and
- compare the measured value with the expected value and, based on such comparison, perform the irreversible cut of the circuit and,
optionally, the comparison between the measured value and the expected value comprises determining whether the measured value is higher than the expected value summed with a predefined tolerance and if so, perform the irreversible cut of the circuit and, optionally, the comparison of the measured value and the expected value is performed during a predefined period of time and, optionally, it further comprises obtaining one or more messages from an external controller, such one or more messages comprising information on the expected parameter value.

13. A method according to any of the claims 10-12 wherein the parameter of the load or of the power source is a consumption of the load and, optionally, the measured parameter value and the expected parameter value are current values and, optionally, the at least one measured current value is obtained through a current sensor.

14. A method according to any of the claims 10-13 wherein the parameter of the load or of the power source is a temperature of the power source and, optionally, it further comprises providing a temperature sensor adjacently or in contact with the power source, the measured temperature value being obtained through such temperature sensor and, optionally, the fuse has a predefined fusing current of 200 A or less, preferably of 100 A or less, more preferably of a value within the range of 50-100 A.

15. A method according to any of the claims 10-14 wherein it comprises identifying an electrical risk associated with a load and/or a power source from a plurality of loads and/or a plurality of power sources and, upon the detection of such electrical risk, perform an irreversible cut of a circuit associated with such load and/or power source by generating a current higher than a predefined fusing current of a fuse and thereby irreversibly cutting the said circuit connection by blowing the fuse and, optionally, the referred generation of a current higher than a predefined fusing current is performed on a fuse corresponding to said load and/or power source with an identified electrical risk, independently from any other loads from said plurality of loads and/or any other power sources from said plurality of power sources.
